**Europäisches Patentamt**

**European Patent Office**

**Office européen des brevets**

(11) **EP 0 865 955 B1**

(12) **EUROPEAN PATENT SPECIFICATION**

(45) Date of publication and mention
of the grant of the patent:
**28.11.2001 Bulletin 2001/48**

(51) Int Cl.$^7$: **B60K 17/346**, B60K 17/35

(21) Application number: **98105135.2**

(22) Date of filing: **20.03.1998**

(54) **Four-wheel drive transmission**

Vierradantrieb

Entraînement pour véhicules à quatre roues motrices

(84) Designated Contracting States:
**AT BE CH DE DK ES FI FR GB GR IE IT LI LU MC NL PT SE**

(30) Priority: **21.03.1997 US 41285 P**
**04.02.1998 US 18192**
**04.02.1998 US 18190**

(43) Date of publication of application:
**23.09.1998 Bulletin 1998/39**

(73) Proprietor: **New Venture Gear, Inc.**
**Troy, Michigan 48083 (US)**

(72) Inventors:
• **Brown, David Acorn Cottage**
**Hopton, Diss Norfolk 1P22-2QT (GB)**
• **Zajac, Alan P.**
**Clay, New York 13041 (US)**

(74) Representative: **Schaumburg, Thoenes & Thurn**
**Postfach 86 07 48**
**81634 München (DE)**

(56) References cited:
**EP-A- 0 531 088**      **EP-A- 0 820 892**
**AU-B- 545 514**        **GB-A- 2 035 930**
**US-A- 5 078 660**      **US-A- 5 215 160**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

## BACKGROUND OF THE INVENTION

The present invention relates generally to transmissions for use in four-wheel drive vehicles. More particularly, the present invention is directed to a transmission having a multi-speed geartrain and a power transfer mechanism contained in a single unit.

As is known, the majority of four-wheel drive vehicles are equipped with a transfer case mounted to a multi-speed transmission for directing power from the engine to all four wheels. To accommodate different road surfaces and conditions, many transfer cases are equipped with a mode shift mechanism which permits the vehicle operator to selectively de-couple one set of wheels for establishing a two-wheel drive mode in addition to the four-wheel drive mode. In addition, some transfer cases are also equipped with a gear reduction unit for providing a high-range (i.e., direct drive) and a low-range (i.e., reduced ratio drive) four-wheel drive mode. Finally, some transfer cases are equipped with an interaxle differential for permitting torque proportioning and speed differentiation between the front and rear drivelines of the four-wheel drive vehicle.

In an effort to minimize the overall size of the drivetrain used in four-wheel drive vehicles, it has been proposed to utilize a transmission of a transaxle-type normally used to drive the front wheels of a front wheel drive vehicle as a four-wheel drive geartrain. In particular, British Patent No. 2,035,930 discloses a transmission according to the preamble of claim 1 and teaches of rotating the front wheel drivetrain (i.e., engine and transaxle) 90° such that the transaxle outputs can be interconnected to the front and rear drivelines of the motor vehicle. While such an arrangement may provide an economical drivetrain layout for a full-time four-wheel drive vehicle, the practical applications for such an arrangement are severely limited. In particular, such an arrangement does not permit the vehicle operator to selectively shift "on-the-fly" between high and low four-wheel drive modes, nor can one of the outputs be selectively disconnected from its driveline for establishing a two-wheel drive mode.

Additionally, the interaxle differential and planetary gearset are not space optimized. This results in significant packaging disadvantages including under body clearance which is particularly important to four - wheel drive vehicles .

Accordingly, the need exists for a transmission which can be used in most conventional four-wheel drive applications and which permits the vehicle operator to selectively shift between the available drive modes and speed ranges.

European Patent No. 0 531 088, United States Patent 5 078 660 and Unites States Patent 5 215 160 each disclose a transfer case configuration adaptable for rise with a transmission for providing power to both a front and rear driveline. These references, however, fail to teach the complete integration of such a system within a transmission.

## SUMMARY OF THE INVENTION

It is therefore an object of the present invention to provide a transmission for use with four-wheel drive vehicles having a multi-speed geartrain and a power transfer mechanism integrated into a single unit, having an improved underbody packaging, and allowing "on-the-fly" shifting between high and low four-wheel drive modes.

The invention solves this object by means of a transmission according to claim 1.

The invention provides the power transfer mechanism of the transmission with an interaxle differential for establishing a differentiated or "full-time" four-wheel drive mode. Further, a lock-out clutch may be optionally provided for selectively locking the interaxle differential to establish a non-differentiated or "locked" four-wheel drive mode.

The transmission may have a power transfer mechanism equipped with a transfer clutch for automatically controlling torque distribution and speed differentiation across the interaxle differential in response to speed differentials between the front and rear output shafts.

According to the invention the power transfer mechanism of the transmission is equipped with a synchronized mode clutch for permitting "on-the-fly" shifting between a four-wheel drive mode and a two-wheel drive mode.

Accordingly, the transmission of the present invention includes a multi-speed geartrain including a input shaft, a mainshaft, and a plurality of constant-mesh gearsets arranged for selectively coupling the mainshaft to the input shaft for driven rotation at various speed ratios. The mainshaft can be selectively coupled to a power transfer mechanism for establishing two alternative power transmission routes. In particular, a synchronized range shift mechanism is provided for establishing a high-range transmission route and a low-range transmission route from the mainshaft to the input of an interaxle differential. The torque delivered to the interaxle differential is split between the front and rear drivelines to establish the full-time four-wheel drive mode. Additionally, a lock-out clutch can be provided for permitting the interaxle differential to be locked for establishing the locked four-wheel drive mode. Optionally, the power transfer mechanism further includes a transfer clutch which can be passively or automatically actuated to limit slip and bias the torque distribution between the front and rear drivelines. Finally, a mode clutch can be provided for permitting one of the drivelines to be selectively disconnected from the transmission for establishing two-wheel drive modes.

## BRIEF DESCRIPTION OF THE DRAWINGS

Further objects, features and advantages of the present invention will become apparent to those skilled in the art from studying the following description and the accompanying drawings in which:

FIG. 1 is a schematic view of a four-wheel drive motor vehicle equipped with a transmission according to the present invention;

FIG. 2 is a sectional view of the transmission constructed according to a first embodiment of the present invention;

FIG. 3 is a table listing the combination of speed ranges available with the transmission of the present invention;

FIG. 4 is a diagram of the shift pattern for the gearshift system used in association with the transmission;

FIG. 5 is a partial sectional view illustrating a transfer clutch installed in the transmission;

FIG. 6 is a partial view of an alternative arrangement for the transfer clutch shown in FIG. 5;

FIG. 7 is a partial sectional view illustrating an electronically-controlled transfer clutch installed in the transmission;

FIG. 8 is a block diagram of a control system for use with the transfer case shown in FIG. 7;

FIG. 9 is a graph illustrating control parameters used in association with the control system shown in FIG. 8;

FIG. 10 is a flow chart depicting a control sequence for the operations performed by the control system of FIG. 8; and

FIG. 11 is a schematic illustration of the transmission equipped with a lock-out clutch and a mode clutch.

## DETAILED DESCRIPTION OF THE PREFERRED EMBODIMENTS

The present invention relates to a multi-speed transmission for use in four-wheel drive vehicles. In general, the transmission integrates a multi-speed geartrain and a power transfer mechanism into a common housing assembly and is adapted for use with a longitudinally-aligned engine. More particularly, the geartrain and power transfer mechanism provide at least eight forward speed ratios and two reverse speed ratios which are delivered to the vehicle's front and rear drivelines. The power transfer mechanism can be provided in several different arrangements to provide different combinations of available drive modes. For example, the power transfer mechanism includes a synchronized range shift mechanism for permitting the vehicle to be shifted "on-the-fly" between a series of high-range speed ratios and low-range speed ratios. Additionally, the power transfer mechanism includes an interaxle differential interconnecting the output of the range shift mechanism to the front and rear drivelines for establishing a full-time (i.e., "differentiated") four-wheel drive mode. Passive or actively-controlled transfer clutches can be included into the transmission to limit slip and bias torque across the interaxle differential. Alternatively, a lock-out clutch can also be provided for selectively locking the interaxle differential to establish a locked (i.e., "non-differentiated") four-wheel drive mode. The power transfer mechanism may also include a synchronized mode clutch operable for selectively connecting and disconnecting the transmission from the one of the drivelines for shifting "on-the-fly" between a two-wheel drive mode and a four-wheel drive mode. As will be understood, the various novel transmissions to be disclosed hereafter are shown in a merely exemplary vehicular application to which modifications can be made.

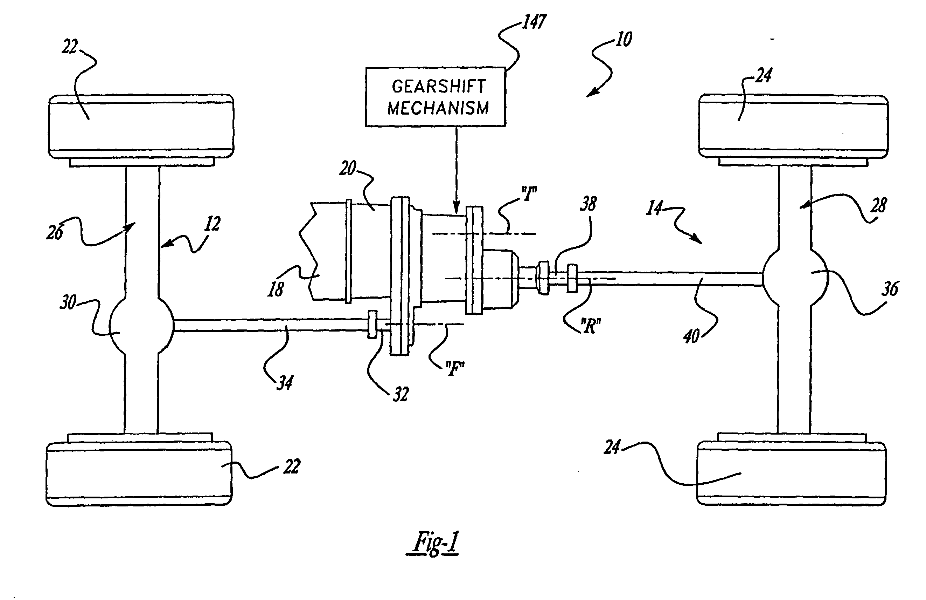

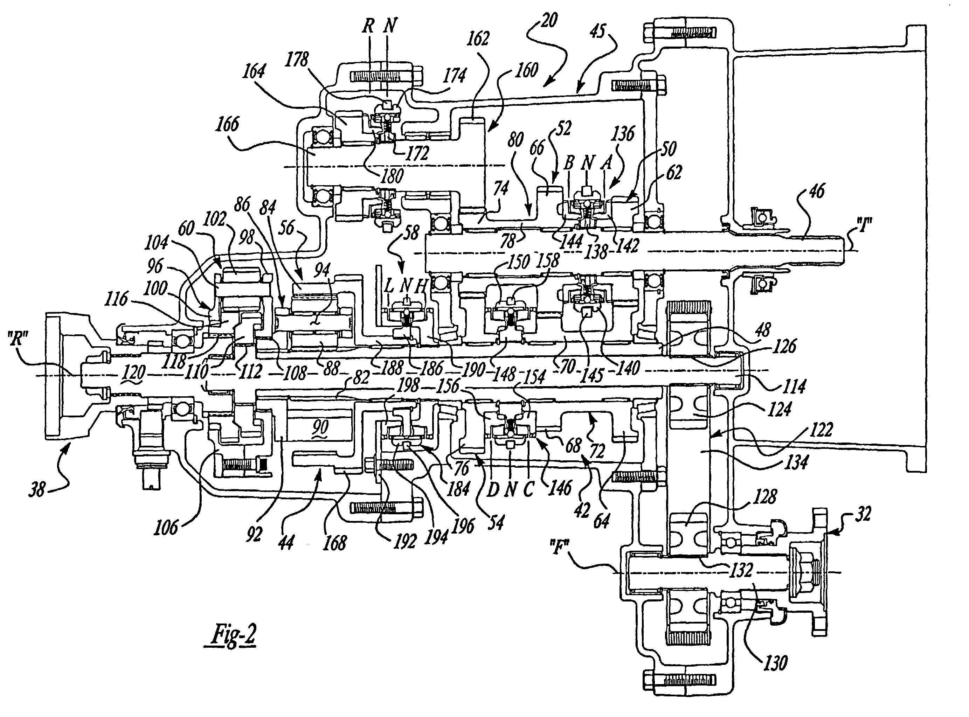

Referring to FIG. 1, a motor vehicle 10 is schematically shown. Vehicle 10 has a front driveline 12 and a rear driveline 14 drivable from a source of power, such as an engine 18, through a transmission 20. Engine 18 is mounted in an in-line or longitudinal orientation along the long axis of vehicle 10 and its output is coupled to the input of transmission 20. Front and rear wheels 22 and 24 are part of front and rear drivelines 12 and 14, respectively, and are connected at opposite ends of front and rear axle assemblies 26 and 28, respectively. Front axle assembly 26 includes a front differential 30 that is coupled to a front output 32 of transmission 20 via a front prop shaft 34. Likewise, rear axle assembly 28 includes a rear differential 36 that is coupled to a rear output 38 of transmission 20 via a rear prop shaft 40. As is conventional, one or more universal joints (not shown) may be installed on opposite ends of prop shafts 34 and 40, as required. As will be detailed, an inherent feature of transmission 20 is that its output 32 and 38 can be offset relative to each other as well as to the transmission input to provide improved underbody packaging. As seen from FIG. 2, the input to transmission 20 is rotatably about a first ("I") axis while front and rear outputs 32 and 38 are respectively shown rotatable about a second ("F") and a third ("R") axis.

With particular reference to FIG. 2, transmission 20 is shown to include two primary sections, namely, a multi-speed geartrain 42 and a power transfer mechanism 44, both of which are located with a housing assembly 45. Geartrain 42 includes an input shaft 46 driven by the output of engine 18 through engagement of a conventional manually-operable clutch (not shown), a mainshaft 48, and a series of constant-mesh gearsets 50, 52 and 54. As will be detailed, each gearset can be selectively engaged for coupling mainshaft 48 to input shaft 46 for rotation at a predetermined gear or speed ratio. Thus, rotary power (i.e., drive torque) from engine 18 is selectively delivered from input shaft 46 to mainshaft 48 through the gearsets. Power is thereafter delivered from mainshaft 48 to front and rear outputs 32 and 38 via power transfer mechanism 44. In general, power transfer mechanism 44 of transmission 20 includes a planetary gearset 56, a synchronized range shift mechanism 58, and an interaxle differential 60 interconnecting the output of planetary gearset 56 to front output 32 and rear output 38. Interaxle differential 60 permits speed differentiation between front output 32 and rear output 38 while delivering drive torque thereto at a predetermined torque split or ratio. Accordingly, differentiated or "full-time" four-wheel drive mode is established by transmission 20. While interaxle differential 60 is specifically shown as a planetary-type gearset, it will be appreciated that any suitable equivalent differential device known in the transmission art can be used in substitution therefor.

With continued reference to FIG. 2, first gearset 50 is shown to include a first input gear 62 rotatably supported on input shaft 46 and which is in constant-mesh with a first drive gear 64 rotatably supported on mainshaft 48. Second gearset 52 includes a second input gear 66 rotatably supported on input shaft 46 and which is in constant-mesh with a second drive gear 68 rotatably supported on mainshaft 48. First drive gear 64 and second drive gear 68 are shown integrally formed on a stubshaft 70 to define a first compound gear 72. Third gearset 54 is shown to include a third input gear 74 rotatably supported on input shaft 46 and which is in constant-mesh with a third drive gear 76 rotatably supported on mainshaft 48. Second input gear 66 and third input gear 74 are integrally formed on a stubshaft 78 for defining a second compound gear 80.

Planetary gearset 56 includes a sun gear 82 formed integrally on an end portion of mainshaft 48, a ring gear 84, and a carrier assembly 86 having a plurality of pinion gears 88 rotatably supported therefrom which are meshed with sun gear 82 and ring gear 84. In particular, carrier assembly 86 includes a front carrier plate 90 and a rear carrier plate 92 which are suitably interconnected, with pinion shafts 94 extending therebetween on which pinion gears 88 are rotatably supported.

In general, interaxle differential 60 has an input driven by carrier assembly 86 of planetary gearset 56, a first output connected to front output 32, and a second output connected to rear output 38. More specifically, interaxle differential 60 includes a planet carrier 96 having a front carrier ring 98, a rear carrier ring 100, a first set of pinions 102 rotatably supported between carrier rings 98 and 100 on pinion shafts 104, and a second set of pinions 106 (shown in phantom) likewise rotatably supported on pinion shafts (not shown) between carrier rings 98 and 100. Planet carrier 96 is driven by planetary gearset 56 in that carrier ring 98 is fixed via a splined connection 108 to rear carrier plate 92 of carrier assembly 86. As seen, a first sun gear 110 is fixed via a splined connection 112 to one end of a transfer shaft 114 which concentrically extends through hollow mainshaft 48 for rotation relative thereto about the third axis. A second sun gear 116 is fixed via a splined connection 118 to a rear output shaft 120. Rear output shaft 120 is adapted to be interconnected to rear propshaft 40 in a conventional manner. Each first pinion 102 is in constant-mesh with second sun gear 116 and with a corresponding one of second pinions 106. Second pinions 106 are also in constant-mesh with first sun gear 110. Thus, interaxle differential 60 transfers drive torque from planet carrier 96 to transfer shaft 114 via first sun gear 110 and to rear output shaft 120 via second sun gear 116. This arrangement permits speed differentiation between rear output shaft 20 and transfer shaft 114 while providing a predetermined torque split therebetween.

As is traditional, the torque distribution ratio across interaxle differential 60 is based on the gear geometry for each of the meshed gear components associated therewith. To provide means for transferring drive torque from transfer shaft 114 to front output 32, a drive mechanism 122 is provided. Drive mechanism 122 includes a drive sprocket 124 fixed via a splined connection 126 to transfer shaft 114, a driven sprocket 128 fixed to a front output shaft 130 via a splined connection 132, and a continuous drive chain 134 meshed with both drive sprocket 124 and driven sprocket 128. Front output shaft 130 is adapted to be connected to front propshaft 34 in a conventional manner.

As noted, geartrain 42 is arranged to deliver drive torque at various speed ratios from input shaft 46 to mainshaft 48. As such, geartrain 42 includes a first synchronizer clutch assembly 136 operably installed between first input gear 62 and second input gear 66 on input shaft 46. First synchronizer clutch assembly 136 includes a hub 138 fixed (i.e., splined) for rotation with input shaft 46 and a clutch sleeve 140 supported for rotation with and bi-directional axial movement on hub 138. First synchronizer clutch assembly 136 is shown as a single-cone type arrangement with it understood that any suitable synchronizer clutch used for effecting synchronous gear changes between input shaft 46 and mainshaft 48 may be used. When clutch sleeve 140 is moved from the central non-actuated or neutral (N) position shown to the position denoted by construction line "A", it couples first input gear 62 to input shaft 46. In particular, upon synchronization between input shaft 46 and first input gear 62, the spline teeth of clutch sleeve 140 move into meshed engagement with clutch teeth on a clutch ring 142 fixed to first input gear 62. Conversely, when clutch sleeve 140 is moved from the neutral (N) position to the position denoted by construction line "B" it couples second input gear 66 to input shaft 46. Such movement of clutch sleeve 140 from its neutral (N) position to its (B) position causes speed synchronization between second compound gear 80 and input shaft 46 and thereafter permits the spline teeth of clutch sleeve 140 to move into engagement with clutch teeth formed on a clutch ring 144 fixed to second input gear 66. Clutch sleeve 140 is axially moveable relative to hub 138 in a well known manner by means of a first shift fork, partially shown at reference numeral 145, which is attached to a suitable gear shift mechanism, schematically shown in FIG. 1 by block 147. Gearshift mechanism 147 can be a manually-actuated arrangement having a gearshift lever coupled by a shift assembly to the shift forks. Alternatively, a shift-by-wire arrangement can be used wherein movement of the gearshift lever causes actuation of electrically-operated actuators which, in turn, cause movement of the shift forks.

A second synchronizer clutch assembly 146, also shown as a single-cone arrangement, is operably installed on mainshaft 48 between second drive gear 68 and third drive gear 76. Synchronizer clutch assembly 146 includes a hub 148 fixed (i.e., splined) for rotation with mainshaft 48 and a clutch sleeve 150 that is supported for rotation with a bi-directional axial movement on hub 148. When clutch sleeve 150 is moved from the central non-actuated or neutral (N) position shown to the position denoted by construction line "C" it couples second drive gear 68 to mainshaft 48, thereby coupling first compound gear 72 to mainshaft 48. In particular, upon synchronization between mainshaft 48 and third drive gear 68, the splines of clutch sleeve 150 are adapted to move into engagement with the clutch teeth formed on a clutch ring 154 fixed to second drive gear 68. Conversely, when clutch sleeve 150 is moved from the neutral (N) position to the position denoted by construction line "D" it couples third drive gear 76 to mainshaft 48. Again, following synchronization between third drive gear 76 and mainshaft 48, the spline teeth of clutch sleeve 150 moves into meshed engagement with clutch teeth formed on a clutch ring 156 fixed to third drive gear 76. Clutch sleeve 150 is axially movable between its "C" and "D" positions by means of a second shift fork, partially shown at 158, that is also coupled to gearshift mechanism 147.

Geartrain 42 also includes a synchronized reverse gear assembly 160 having a reverse input gear 162 in constant-mesh with third input gear 74 and a reverse output gear 164 which is rotatably supported on a stubshaft 166. As seen, reverse input gear 162 is integrally formed on stubshaft 166. Reverse output gear 164 is in constant-mesh with reverse transfer gear 168 integrally formed on ring gear 84 of planetary gearset 56. This constant-mesh engagement is shown schematically by phantom lines in FIG, 2. Additionally, geartrain 42 includes a third synchronizer clutch assembly 170, also preferably of the single-cone type, which includes a hub 172 fixed (i.e., splined) to stubshaft 166 and a clutch sleeve 174 which is supported for rotation with and axial sliding movement on hub 172. Clutch sleeve 174 is movable between the non-actuated or neutral (N) position shown to a position denoted by construction line "R" for coupling reverse output gear 164 to stubshaft 166, thereby transferring torque delivered to second compound gear 80 to ring gear 84 of planetary gearset 56 to establish a pair of reverse speed ratios as will be described. Specifically, splines on clutch sleeve 174 can move into engagement with clutch teeth formed on a clutch ring 180 fixed to reverse output gear 164 following speed synchronization between reverse output gear 164 and reverse input gear 162. A third shift fork, partially shown at 178, is also interconnected to gearshift mechanism 147.

To provide means for delivering drive torque from mainshaft 48 to the input of interaxle differential 60, synchronized range shift mechanism 58 is provided in associated with planetary gearset 56. As best seen from FIG. 2, synchronized range shift mechanism 58 includes a fourth synchronizer clutch assembly 184 having a hub 186 fixed (i.e., splined) to an axial hub segment 188 of ring gear 84 which is rotatably supported on mainshaft 48. Synchronizer clutch assembly 184 further includes a drive hub 190 fixed (i.e., splined) to mainshaft 48 and a brake plate 192 fixed (i.e., bolted) to housing 45. A range sleeve 194 is supported for rotation with and bi-directional axial movement on hub 186 from the central non-actuated neutral (N) position shown to one of a high-range (H) position and a low-range (L) position via movement of a fourth shift fork 196, likewise connected to gearshift mechanism 147. Axial movement of range sleeve 194 from its neutral position (N) to its high-range position (H) results in speed synchronization between mainshaft 48 and ring gear 84. Following such synchronization, splines on range sleeve 194 can be moved into meshed engagement with clutch teeth formed on drive hub 190 for coupling ring gear 84 for direct rotation with mainshaft 48. Since sun gear 82 is also driven directly by mainshaft 48, such locking of ring gear 84 to mainshaft 48 results in carrier assembly 86 being rotatably driven at a direct speed ratio relative to mainshaft 48 for establishing a high-range speed ratio. Thus, with range sleeve 194 in its high-range (H) position, carrier assembly 86 is driven at the same rotary speed as mainshaft 48 for supplying drive torque to planet carrier 96 of interaxle differential 60 via a high-range power transmission route. Conversely, axial movement of range sleeve 194 from its neutral (N) position toward its low-range (L) position results in speed synchronization between ring gear 84 and housing 45, whereby ring gear 84 is braked against rotary motion. Following braking of ring gear 84, the splines of range sleeve 194 can move into meshed engagement with clutch teeth formed on a clutch ring 198 fixed to brake plate 192. With ring gear 84 held against rotation, carrier assembly 86 is driven at a reduced speed ratio relative to mainshaft 48 for establishing a low-range power transmission route between mainshaft 48 and planet carrier 96.

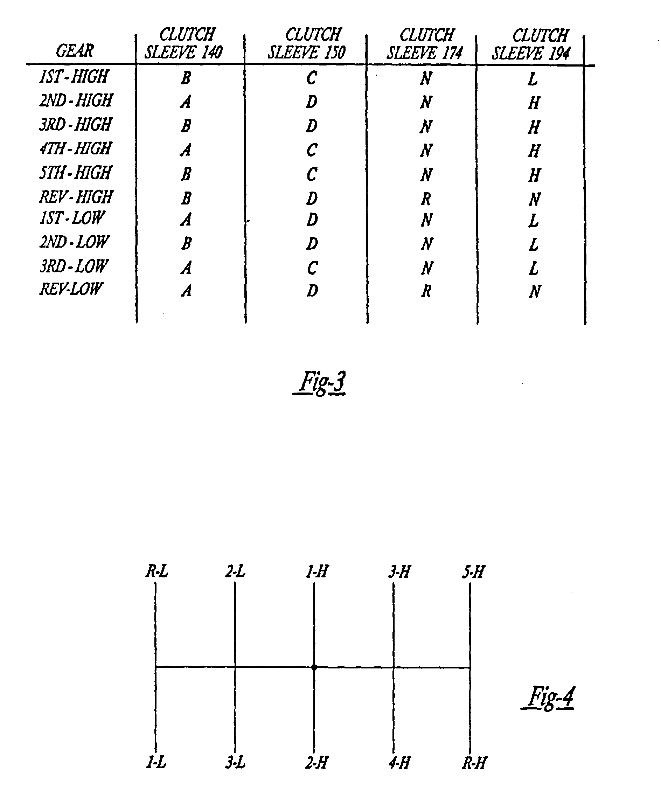

Referring now to FIG. 3, a table is shown which identifies the positions of shift sleeves 140, 150, 174 and 194 for establishing at least eight forward speed ratios and a pair of reverse speed ratios. A shift pattern for gear shift mechanism 147 is shown in FIG. 4 for establishing the various available speed ratios. Preferably, the available speed ratios are segregated into a first or "High" set of gears and a second or "Low" set of gears. The High set of gears includes five forward speed ratios and a reverse speed ratio which are well-suited for normal on-road driving conditions. In contrast, the Low set of gears includes three forward speed ratios and a reverse speed ratio that are well-suited for off-road driving needs. As a means of reducing the inertial loading during gear shifting, it can be seen that clutch sleeve 140 moves through its neutral position which shifting between each forward speed ratio. Gearshift mechanism 147 is intended to encompass any suitable manually-operated or electrically-actuated device or system capable of controlling coordinated movement of the clutch sleeves and the range sleeve for establishing the desired speed ratio. For example, gearshift mechanism 147 can include a single shift lever movable through the shift gate pattern shown in FIG. 4 to establish any of the ten available gears. In the alternative, gearshift mechanism 147 can utilize separate shift levers for controlling each of the High and Low sets of gears.

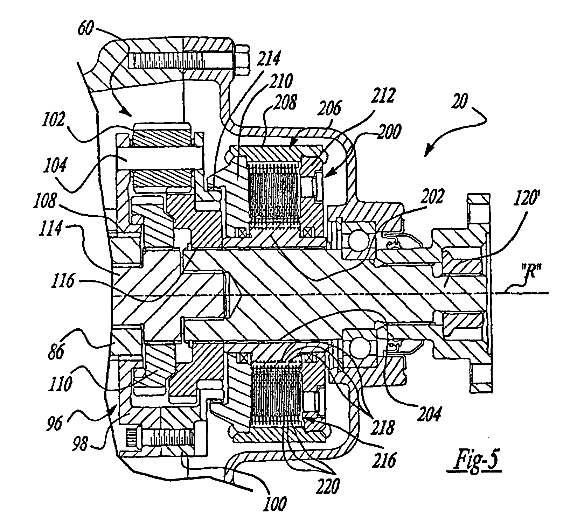

Referring now to FIG. 5, transmission 20 is shown in a modified version in which a torque transfer clutch has been operably installed for automatically controlling the torque distribution across interaxle differential 60 in response to speed differentials (i.e., interaxle slip) between front output shaft 130 and rear output shaft 120. Since the majority of the components shown in FIG. 5 are similar in function to those previously described with reference to FIG. 2, those that have been modified are identified with a primed reference numeral. According to the embodiment shown, the torque transfer clutch is a viscous coupling 200 having an inner drum 202 fixed via a splined connection 204 to rear output shaft 120' and a cover assembly 206 supported and sealed relative to inner drum 202 for rotation relative thereto. In particular, cover assembly 206 includes an outer drum 208 to which a front end plate 210 and a rear end plate 212 are secured. Front end plate 210 is shown to be fixed via a splined connection 214 for rotation with rear carrier ring 100 of planet carrier 96. A clutch pack 216 is retained within the sealed chamber formed between cover assembly 206 and inner drum 202 and includes a set of inner clutch plates 218 secured for rotation with inner drum 202 and a set of outer clutch plates 220 secured for rotation with outer drum 208. Inner and outer clutch plates 218 and 220 are alternately interleaved and the sealed chamber is filled with a predetermined volume of a viscous fluid. As is known, increasing relative rotation between outer drum 208 and inner drum 202 results in shearing of the viscous fluid within the sealed chamber for transferring torque through clutch pack 216 to the slower rotating components, thereby automatically biasing the torque transferred across interaxle differential 60. Thus, the torque biasing is automatic and speed dependent. Furthermore, it is contemplated that other on-demand torque transfer clutches can be substituted for the viscous coupling. For example, commonly-owned U. S. Pat. No. 5,456,642 to Frost discloses a geared traction unit which could easily be adapted for use in transmission 20 as a slip limiting device. As such, it is to be understood that the transfer clutch can be any suitable speed-sensitive and/or torque-sensitive device applicable for use in four-wheel drive vehicles.

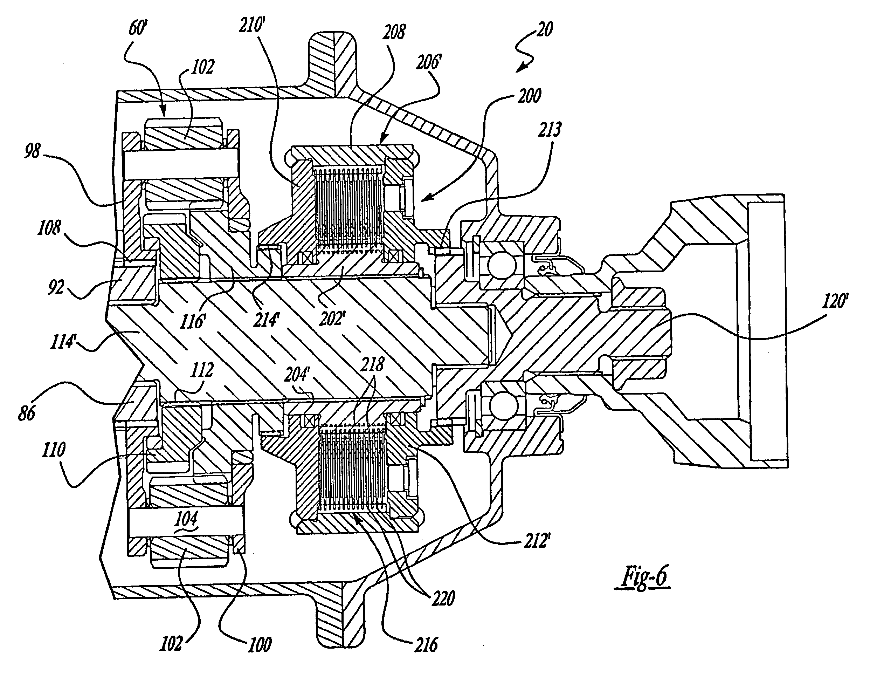

Referring now to FIG. 6, an alternative to the arrangement shown in FIG. 5 is provided. Specifically, the transfer clutch is now shown as a viscous coupling 200 having inner drum 202' fixed via a splined connection 204' to transfer shaft 114' while front end plate 210' of cover assembly 206' is fixed via a splined connection 214' for rotation with second sun gear 116' which is shown journally supported on transfer shaft 114'. Moreover, cover assembly 206' has a rear end plate 212' which is coupled via a splined connection 213 to rear output shaft 120'. As such, cover assembly 206' couples second sun gear 116' to rear output shaft 120'. The remainder of the components are generally similar to those shown and described for the viscous coupling in FIG. 5 with it being understood that the viscous coupling functions as a slip limiting/torque biasing device for limiting excessive slip across differential 60'.

As an alternative to the passive transfer clutches shown in FIGS. 5 and 6, FIG. 8 illustrates a block diagram for an electronically-controlled power transfer system 222 that can be used to adaptively control the actuated condition of an electrically-actuated transfer clutch 228. Preferably, transfer clutch 228 has a multi-plate clutch assembly and a thrust mechanism which applies a clutch engagement force on the clutch pack. The thrust mechanism is caused to move relative to the clutch pack in response to actuation of a power-operated actuator 230 which receives electric control signals from a controller 232. Actuator 230 for transfer clutch 228 can be of any type (i.e., electromechanical, electromagnetic, hydraulically-actuated, etc.). To this end, system 222 includes a front speed sensor 234 for measuring the rotational speed of front output shaft 130 (or transfer shaft 114 or front prop shaft 34), a rear speed sensor 236 for measuring the rotational speed of rear output shaft 120 (or rear prop shaft 40), controller 232, and power-operated actuator 230. The speed signals from sensors 234 and 236 are delivered to controller 232 which determines a speed differential signal based thereon. If the speed differential signal exceeds a predetermined threshold value, then controller 232 actuates actuator 230 for applying a clutch engagement force on the clutch pack in transfer clutch 228 for transferring drive torque to the slower turning one of output shafts 120 and 130. The threshold value can be stored in look-up tables or calculated from stored algorithms. Actuation of actuator 230 can be either of the ON/OFF type or the ADAPTIVE type. Under the ON/OFF control scheme, transfer clutch 228 is fully-actuated when the speed differential signal exceeds the threshold value. Alternatively, the ADAPTIVE control scheme is used to vary the magnitude of the clutch engagement force as a function of the magnitude of the speed differential signal. Additional sensor input signals could also be inputted to controller 232 for modifying the parameters under while transfer clutch 228 is actuated. Such sensors could include vehicle speed sensor, brake sensor, acceleration sensor, and the like. In the full-time arrangement of the present invention, transfer clutch 228 is operable to control speed differentiation and bias torque biasing across interaxle differential 60.

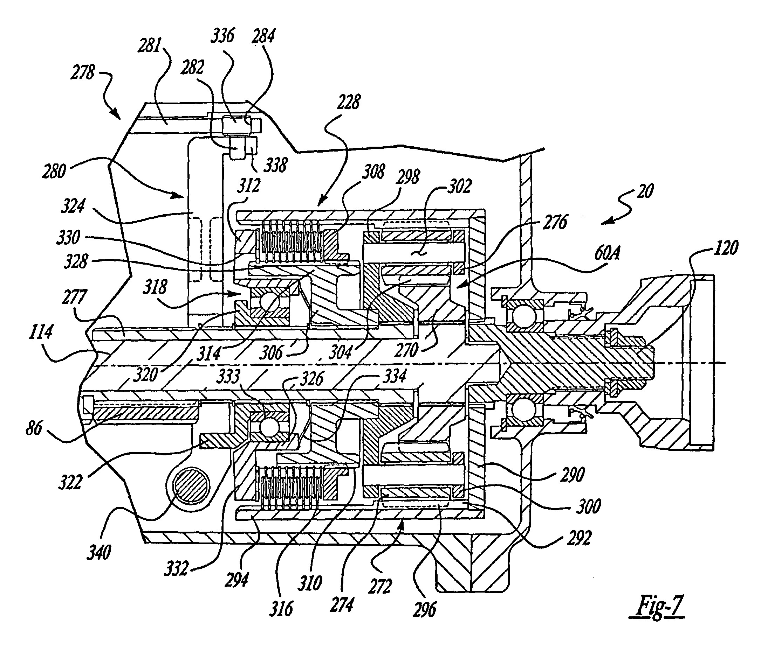

Referring to FIG. 7 of the drawings, an electrically-controlled transfer clutch 228 for transmission 20 is partially shown. In this particular arrangement, interaxle differential 60A is a planetary gearset having a sun gear 270 coupled (i.e., splined) for rotation with transfer shaft 114, a ring gear 272 coupled (i.e., splined) for rotation with a rear output shaft 120, and a plurality of intermeshing pinion gears 274 carried by a planet carrier 276 that is coupled for rotation with a quill shaft 277 which, in turn, is coupled to planet carrier 86. Moreover, each pinion gear 274 intermeshes with both sun gear 270 and ring gear 272. As noted, transmission 20 is also equipped with an electrically-controlled "slip limiting/ torque-biasing" arrangement which includes transfer clutch 228 being operably disposed between quill shaft 277 and rear output shaft 120 to automatically control the amount of speed differentiation and modify the torque distribution ratio between front and rear output shafts 130 and 120, respectively. Transmission 20 is also equipped with a drive mechanism 278 which includes a pivotable lever arm assembly 280 coupled to a sector plate 281. A mode pin 282 secured to lever arm assembly 280 extends into a mode slot 284 formed in sector plate 281. As such, the contour of mode slot 284 formed in sector plate 281 is designed to cause pivotal movement of lever arm assembly 280 in response to rotation of sector plate 281 via actuation of actuator 230. Preferably, actuator 230 is a gearmotor having a rotary output member fixed to sector plate 281.

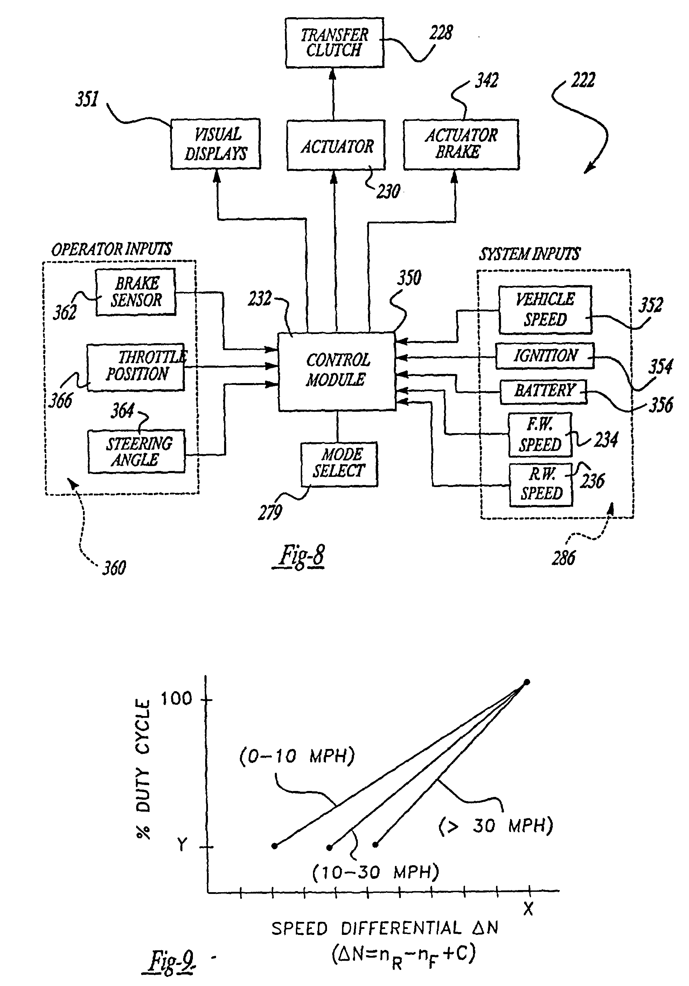

Again referring to FIG. 8, transmission 20 is readily adapted for use with power transfer system 222 having a first sensor group 286 for sensing specific dynamic and operational characteristics of the motor vehicle and for generating sensor input signals indicative thereof, with controller 232 used for generating a control signal in response to the sensor input signals. In operation, controller 232 controls the frictional biasing applied by transfer clutch 228 to the two output members (sun gear 270 and ring gear 272) of interaxle differential 60A by actuating gearmotor 230 as a function of the control signal.

As previously noted, controller 232 can be programmed to automatically control actuation of transfer clutch 228 pursuant to the "ON/OFF" control scheme. In such an arrangement, transfer clutch 228 is normally maintained in a non-actuated condition to permit speed differentiation between front and rear output shafts 130 and 120, respectively. In this condition, transmission 20 is defined as operating in its full-time four-wheel drive mode. However, when the sensor input signals indicate a vehicular condition exceeding a predetermined value, transfer clutch 228 is fully actuated for "locking-up" interaxle differential 60A such that front and rear output shafts 120 and 130 are, in effect, rigidly coupled for establishing a locked or "non-differentiated" four-wheel drive mode. Preferably, the vehicular condition used for controlling actuation of transfer clutch 228 is the speed differential ($\Delta$N) between front prop shaft 34 and rear prop shaft 40 or between front output shaft 130 and rear output shaft 120. Thereafter, transfer clutch 228 is returned to its non-actuation condition when the sensor input signals indicate that the magnitude of the vehicular condition is less than the predetermined value. Alternatively, controller 232 can be programmed in the "ADAPTIVE" control scheme to regulate the actuated condition of transfer clutch 228 between its non-actuated and fully-actuated limits for varying the magnitude of speed differentiation and drive torque transmitted across interaxle differential 60A as a function of the sensor input signals. In either of the above-noted control schemes, control over actuation of transfer clutch 228 is automatic and does not require any act or mode selection on the part of the vehicle operator.

As a further option, a mode select mechanism 279 can be adapted to permit the vehicle operator to select one of an "Automatic" mode and a "Locked" mode. In the Automatic mode, transfer clutch 228 is controllably actuated pursuant to either of the ON/OFF or ADAPTIVE control programs without input from the vehicle operator. However, when the Locked drive mode is selected, transfer clutch 228 is fully-actuated to lock-up differential 60A for delivering non-differentiated drive to transfer case output shafts 130 and 120. The "Locked" mode is provided for permitting improved traction when the motor vehicle is being operated off-road or on severe road conditions. Mode select mechanism 279 can include any suitable selection mechanism (i.e., shift lever, push-button, etc.) capable of generating a mode signal inputted to controller 232.

With continued reference to FIG. 7, a preferred construction for transfer clutch 228 will now be described. A radially-extending end plate 290 connects ring gear 272 to rear output shaft 120. Ring gear 272 is defined by a set of internal gear teeth 292 formed on the inner peripheral surface of a cylindrical outer drum 294 that is fixed to end plate 290. Gear teeth 292 of ring gear 272 are shown in constant meshed engagement with gear teeth 296 of pinion gears 274. As is also shown, planet carrier 276 includes a pair of annular carrier rings 298 and 300 between which pinion gears 274 are journally supported for rotation on pins 302. Carrier ring 298 is fixed (i.e., splined) for common rotation with quill shaft 277. Sun gear 270 has external gear teeth 304 formed thereon which are in constant meshed engagement with gear teeth 296 of pinion gears 274.

Transfer clutch 228 is a mechanically-actuated multi-plate friction clutch assembly arranged to concentrically surround a portion of quill shaft 277. As noted, outer drum 294 is secured by end plate 290 to rear output shaft 120 for rotation therewith. Transfer clutch 228 also includes inner drum 306 that is fixed (i.e., splined) to quill shaft 277 for rotation therewith. Thus, outer drum 294 surrounds inner drum 306 to form an internal chamber therebetween, with outer drum 294 and inner drum 306 being capable of rotating relative to one another. A stop plate 308 is splined for rotation with inner drum 306 and abuts a radial flange stop 310 formed thereon. Disposed within the internal chamber are two set of alternatively interleaved friction clutch plates that are operable for limiting speed differentiation and biasing the torque distribution across interaxle differential 60A. Inner clutch plates 312 are mounted (i.e., splined) to an externally-splined rim segment 314 of inner drum 306 for driven rotation with quill shaft 277. Outer clutch plates 316 are mounted (i.e., splined) to an internally-splined segment of outer drum 294 for rotation with rear output shaft 130. The interleaved clutch plates are supported for axial sliding movement to establish frictional contact therebetween.

A thrust mechanism 318 is supported for axial sliding movement on the outer circumference of quill shaft 277 and is operable for frictional compressing the interleaved clutch plates as a function of the clutch engagement force exerted thereon. Thrust mechanism 318 includes an annular inner bearing support 320 which, in this particular embodiment, is journally supported for sliding non-rotatable movement on quill shaft 277. Inner bearing support 320 includes one or more axial flanges 322 that are nested within corresponding apertures in a lever arm 324 for limiting rotation of inner bearing support 320 relative to quill shaft 277 and inner drum 306. Thrust mechanism 318 also includes an annular outer bearing support 326 coupled for rotation with inner drum 294. As seen, axial lugs 328 formed on the distal end of cylindrical rim segment 314 are nested within apertures 330 in a plate segment 332 of outer bearing support 326. A bearing assembly 333 is retained between inner bearing support 320 and outer bearing support 326. Thus, outer bearing support 326 is supported for rotation with inner drum 306 while inner bearing support 320 is held stationary relative thereto. Buttons mounted to lever arm 324 act on inner bearing support 320 for causing sliding movement of thrust mechanism 318 in response to pivotal movement of lever arm assembly 280 for causing a clutch engagement force to be exerted by plate segment 332 of outer bearing support 326 on the interleaved clutch plates. An annular return spring 334 is retained between inner drum 306 and outer bearing support 326 for normally biasing thrust mechanism 318 in a direction away from the interleaved clutch plates.

As noted, actuator 230 is an electric gearmotor which is operable for generating an output torque, the value of which varies as a function of the magnitude of the electrical control signal applied thereto by controller 232. Accordingly, drive mechanism 278 is interconnected to the output member of gearmotor 230 for changing the output torque into an axially-directed force used for controlling the clutch engagement force applied to thrust mechanism 318 of transfer clutch 228. In particular, sector plate 281 is interconnected by mode pin 282 to lever arm 324 and is driven through a limited range of angular motion by the output member of gearmotor 230. As such, the direction and magnitude of rotation of sector plate 281 causes corresponding pivotal movement of lever arm 324 which, in turn, causes sliding movement of thrust mechanism 318 for exerting the clutch engagement force on the interleaved clutch plates. To generate the desired clutch engagement force, sector plate 281 includes mode slot 284 within which a crowned roller 336 fixed to mode pin 282 is retained. Mode pin 282 is fixed to flange section 338 of lever arm 324. The bifurcated ends of lever arm 324 are retained for pivotal movement on rail 340, the ends of which are retained in suitable sockets (not shown) formed in housing assembly 45.

Power transfer system 222 of the present invention, as equipped with full-time transmission 20, functions to continuously monitor interaxle speed differentiation ($\Delta N$) across differential 60A. Since the magnitude of the clutch engagement force generated by lever arm assembly 280 and applied to transfer clutch 228 is proportional to the magnitude of the output torque generated by gearmotor 230 which, in turn, is proportional to the magnitude of the control signal (i.e., percentage duty cycle) applied by controller 232 to gearmotor 230, the magnitude of the clutch engagement force exerted on transfer clutch 228 is also proportional to the magnitude of the control signal. Moreover, a brake 342 can be used for braking the output member of actuator 230 to maintain sector plate 281 in a locked position following selection via mode select mechanism 279 of the Locked mode, thereby permitting the power to actuator 230 to be interrupted for minimizing its on-time service requirements.

With particular reference again to FIG. 8, a block diagram of control system 222 is shown. Preferably, controller 232 is an electronic control unit or module 350 having signal processing and information storage capabilities. A visual display 351 is provided within the passenger compartment of the vehicle to indicate the particular mode in which transmission 20 is currently operating. In addition, first sensor group 286 is shown as a group of various "system" sensors that are provided for detecting and signaling specific dynamic and operational characteristics of the motor vehicle. The input signals generated by the "systems" sensor group are delivered to electronic control module 350. Preferably, these sensors include front speed sensor 234 for sensing the rotational speed ($n_F$) of front prop shaft 34 or front output shaft 130, rear speed sensor 236 for sensing the rotational speed ($n_R$) of rear prop shaft 40 or rear output shaft 120, a vehicle speed sensor 352 for sensing a vehicle speed (V), an ignition switch 354 for signalling the operational status of the vehicle, and a battery input 356 for powering electronic control module 350. In vehicles equipped with an anti-lock brake system (ABS), the original equipment ABS sensors provided at each wheel can be used for determining an "average" front drive shaft speed and rear drive shaft speed. Moreover, it is possible for vehicle speed sensor 352 to be eliminated with the vehicle speed signal (V) being computed from the front rotational speed signal ($n_F$) generated by front speed sensor 234. However, it is to be understood that any suitable speed sensing arrangement capable of generating a signal indicative of the rotational speed of a shaft is fairly within the scope of the present invention.

The control system also illustrates the use of various "operator-initiated" inputs, as generally categorized by second sensor means 360. These inputs include a brake sensor 362 for sensing when the vehicle operator is applying the brakes, a steering angle sensor 364 for detecting the magnitude of a steering angle (Φ), and an accelerator sensor for sensing an accelerating condition of the vehicle. Preferably, the accelerator sensor is a throttle position sensor 366 for sensing the degree of opening of a throttle valve associated with engine 18 or for sensing the degree of depression of an accelerator pedal, and is operable to produce a throttle position signal (A). The operator-initiated input signals are delivered to control module 350 where they are used, in conjunction with the system input signals, to further control "on-demand" operation.

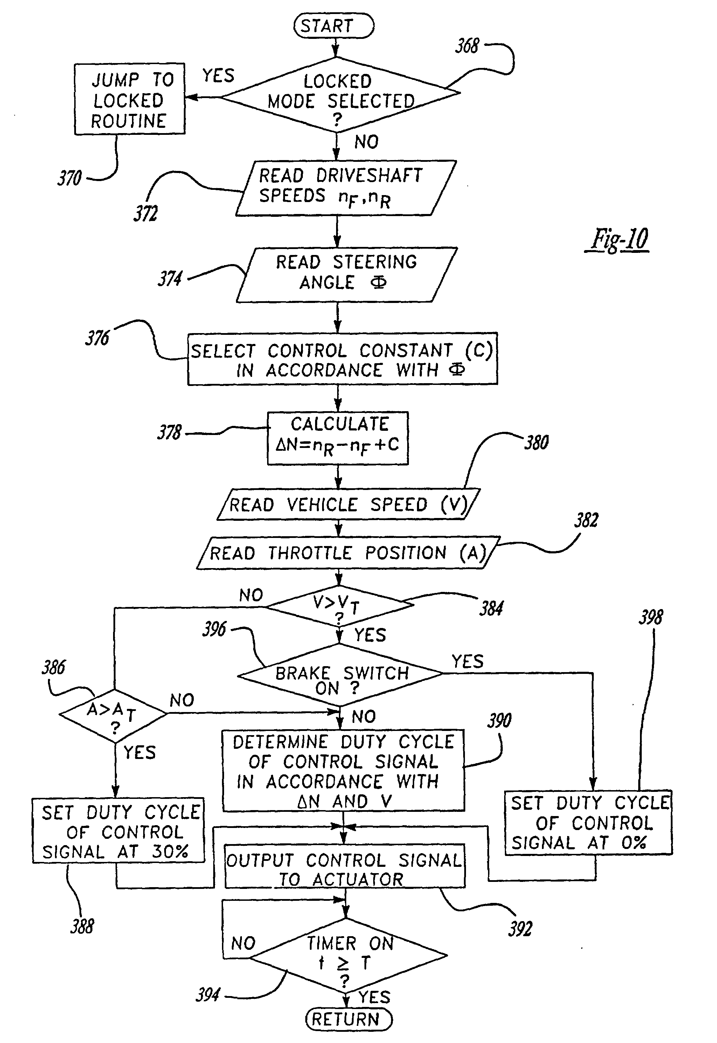

With reference now to FIG. 10, a control sequence for controlling the "on-demand" operation of the power transfer system is shown. In general, the flow chart represents a sequence of the operations performed by electronic control module 350 and which are diagrammatically shown in block form. More specifically, the flow chart illustrates a succession of control steps that are continuously repeated for selecting the value of the control signal to be applied to actuator 230 in accordance with various predefined relationships between the current value of a front and rear wheel speed differential (ΔN) and vehicle speed (V), as modified by the steering angle (ϕ) and other operator-initiated inputs. Block 368 is representative of the step determining whether a mode signal from mode select mechanism 279 indicating selection of a "Locked" mode has been received. If yes, then the control sequence jumps to a locked routine, as indicated by block 370, wherein transfer clutch 228 is fully-actuated and brake 342 is subsequently engaged. If no, the control sequences moves to block 372 which is representative of the "Automatic" control step in which the current value of the front rotational speed ($n_F$) and the rear rotational speed ($n_R$) are read. Block 374 indicates the step of reading the value of steering angle (Φ) as detected by steering angle sensor 364. Block 376 represents the operation of selecting a control characteristic (C) in accordance with the steering angle (Φ). The control characteristic (C) is a function of the detected steering angle (Φ). Next, block 378 represents the step of calculating a speed differential (ΔN) according to the equation

$$\Delta N = n_R - n_F + C$$

Blocks 380 and 382 indicate the steps of reading the current value of the vehicle speed (V) as detected by vehicle speed sensor 352 and the throttle position (A) as detected by throttle position sensor 366, respectively. As shown in block 384, control module 350 determines whether the vehicle speed (V) exceeds a predefined threshold value ($V_T$) such as, for example, 5 mph. If the vehicle speed is less than the threshold value ($V_T$), a second determination is made, at block 386, as to whether the value of the throttle position (A) exceeds a predefined threshold value ($A_T$) such as, for example, a 50% accelerator pedal depression angle. If the vehicle speed (V) is less than its threshold value ($V_T$) and the throttle position (A) exceeds its threshold value ($A_T$), then the magnitude (i.e., percentage of duty cycle) of the electrical control signal is set as a preset value, such as 30% duty cycle, as indicated by block 388. In this manner, the power transfer system is adapted to transfer torque in response to acceleration at low vehicle speeds to inhibit anticipated wheel slip. However, if the value of the throttle position (A) is less than its threshold value ($A_T$), then the magnitude of the duty cycle for the control signal is set in accordance with predefined relationships between the speed differential signal (ΔN) and vehicle speed (V), as indicated by block 390. Block 392 represents the step of outputting the electrical control signal to rotary actuator 230 for developing the desired amount of torque transfer, if any, across transfer clutch 228. As shown in block 394, a timer circuit within control module 350 is actuated simultaneously with energization of rotary actuator 230 for maintaining such energization for a predetermined time period (T). Once the period of energization (t) equals the predetermined time period (T) (or t ≥ T), control module 350 repeats the control routine.

To enhance steering control, block 396 is indicative of the control step between steps 384 and 390 for determining whether the vehicle operator is applying the brakes when the vehicle speed (V) is greater than the threshold value ($V_T$). Accordingly, if the vehicle operator is attempting to stop the vehicle, by applying the brakes (as sensed by brake sensor 362) during an occurrence of a low traction road condition and the vehicle speed (V) is greater than the predefined threshold ($V_T$), then control module 350 sets the magnitude of the control signal sent to rotary actuator 230 to zero (block 398) for de-actuating transfer clutch 228 and disabling the "on-demand" feature. This control sequence prevents simultaneous braking and "on-demand" operation for providing the vehicle operator with greater steering and braking control. However, during the occurrence of a low traction condition when brake sensor 362 signals control module 350 that the vehicle operator is not applying the brakes, electronic control module 350 automatically energizes rotary actuator 230 (block 392) for actuating transfer clutch 228 in accordance with the relationships generally denoted by block 390.

With particular reference to FIG. 9, a set of exemplary plots used for establishing the magnitude of the duty cycle to be sent to rotary actuator 230 in response to the current value of the speed differential ($\Delta$N) and vehicle speed (V) during "on-demand" operation, as diagrammatically referred to by block 390 in FIG. 10, will now be detailed. As seen, power transfer system 222 correlates the percentage duty cycle of the control signal applied to rotary actuator 230 to a range of speed differential ($\Delta$N) values. In general, the percentage duty cycle for the control signal increases linearly from a minimum actuation value (Y%) to a maximum actuation value (100%) as the value of the speed differential ($\Delta$N), within a particular vehicle speed range, increases from a minimum speed differential limit to a maximum speed differential limit (X). As such, when the value of the speed differential ($\Delta$N) is less than the minimum speed differential limit, no torque biasing is transmitted through transfer clutch 228. However, when the value of the speed differential ($\Delta$N) exceeds the minimum differential limit, torque biasing is provided by supplying a control signal to rotary actuator 230 having a duty cycle value greater than (Y%). Thus, the minimum actuation duty cycle (Y%) for the control signal correlates to the point at which frictional engagement between interleaved clutch plates 312 and 316 results in the initiation of torque biasing control by transfer clutch 228.

The portion of the total drive torque transferred through transfer clutch 228 increases as the magnitude of the duty cycle for the control signal increases from the minimum actuation value (Y%) to the maximum actuation value (100%). Preferably, the maximum value (X) of the speed differential ($\Delta$N) correlates to the maximum actuation duty cycle (100%) at which point the maximum clutch engagement force is generated for completely locking-up clutch plates 312 and 316.

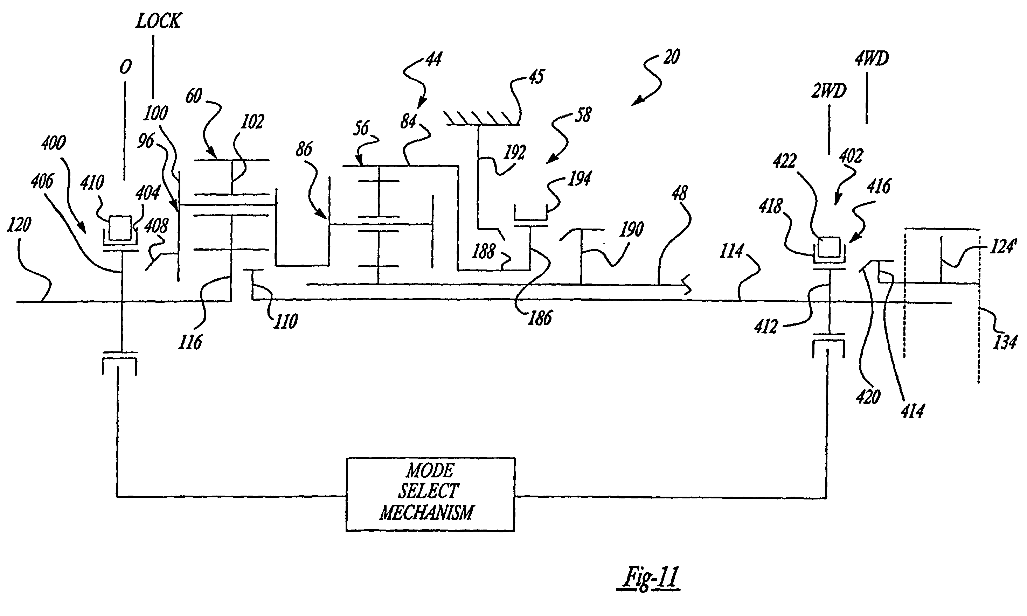

Referring to FIG. 11, a schematic representation of power transfer mechanism 44 of transmission 20 is shown to include a lock-out clutch 400 in association with interaxle differential 60 and a mode clutch 402 in association with drive mechanism 122. Lock-out clutch 400 is operable in a "Locked" mode for inhibiting differentiation across interaxle differential 60 and in an "Open" mode to permit such differentiation. Mode clutch 402 is operable in a 4WD mode for coupling drive sprocket 124' to transfer shaft 114 and in a 2WD mode for uncoupling drive sprocket 124' from transfer shaft 114. As seen, drive sprocket 124' is rotatably supported on transfer shaft 114.

Lock-out clutch 400 includes a lock-out collar 404 splined for rotation with and axial sliding movement on a hub 406 which, in turn, is fixed (i.e., splined) to rear output shaft 120. Lock-out collar 404 is shown in an open (O) position whereat its spline teeth are released from engagement with clutch teeth of a clutch ring 408 fixed to rear carrier ring 100 of planet carrier 96. Lock-out collar 404 can be slid axially to a locked (LOCK) position whereat its spline teeth are meshed with clutch teeth on clutch ring 408, thereby preventing speed differentiation across interaxle differential 60. Movement of lock-out collar 404 is effectuated by a shift fork 410 which is connected to a suitable mode select mechanism. The mode select mechanism can be any manually-operated or power-operated shift system capable of moving lock-out collar 404 to the position corresponding to the selected differential mode. As an option, lock-out clutch 400 may include a synchronizer for causing speed synchronization in response to movement of collar 404 toward its Lock position.

As an additional feature, transmission 20 may also be shifted "on-the-fly" between the four-wheel drive modes and a two-wheel drive mode. To this end, mode clutch 402 provides a means for selectively coupling and uncoupling transfer shaft 114 (or front output shaft 130) to front prop shaft 34. In particular, mode shift mechanism 402 includes a first hub 412 fixed for rotation with transfer shaft 114, a second hub 414 fixed for rotation with drive sprocket 124', and a synchronizer clutch assembly 416 therebetween. Synchronizer clutch assembly 416 includes a mode collar 48 having internal splines which are retained for rotation with and axial sliding movement on external splines formed on first hub 412. A synchronizer 420 is interposed between mode clutch collar 418 and second hub 414 in a well known manner such that movement of mode collar 418 from its 2WD position shown toward its 4WD position causes speed synchronization to occur between front output shaft 130 and transfer shaft 114. Once synchronization is complete, splines on mode collar 418 meshingly engage the clutch teeth on second hub 414, thereby directly coupling drive sprocket 124' to transfer shaft 114. Movement of mode collar 418 is effectuated by a mode fork, partially shown at 422, which is likewise connected to the mode select mechanism. When operation of transmission 20 in a full-time four-wheel drive mode is desired, the vehicle operator actuates the mode select mechanism for locating lock-out collar 404 in its Open position and mode collar 418 in its 4WD position. When a locked four-wheel drive mode is selected, lock-out collar 404 is located in its Lock position and mode collar 418 is located in its 4WD position. Finally, when operation of transmission 20 in the two-wheel drive mode is desired, lock-out collar 404 is located in its Lock position and mode collar 418 is located in its 2WD position.

## Claims

1. A transmission (20) for use in a motor vehicle (10) having an engine (18) and front and rear drivelines (12,14), said transmission (20) comprising:

    a first shaft (46) adapted to be driven by the engine (18);

a second shaft (48);

a plurality of constant mesh gearsets (50,52,54) for selectively coupling said second shaft (48) to said first shaft (46) for driven rotation and various speed ratios;

an interaxle differential (60) having an input member (98), a first output member (110,114) adapted to be interconnected to the front driveline (12), and a second output member (116,120) adapted to be interconnected to the rear driveline (14);

a planetary gearset (56) having a first gear (82) fixed for rotation with said second shaft (48), a second gear (84), and a third gear (88) meshed with said first gear (82) and said second gear (84), said third gear (88) is rotatably supported on a carrier (86) which is coupled to said input member (98) of said interaxle differential; and

a cluth (58) for selectively coupling said second gear (84) to a stationary member for driving said input member (98) at a second speed ratio relative to said second shaft (48), **characterized in that** the clutch is a synchroniser clutch which is further operable for selectively coupling said second gear (84) to said second shaft (48) for driving said input member (98) at a first speed ratio relative to said second shaft (48), and **in that** said second gear (84, 168) is in constant mesh with a reverse gear (164) for selectively establishing a reverse ratio.

2. The transmission (20) of Claim 1 wherein said first gear is a sun gear (82), said second gear is a ring gear (84), and said third gear is a pinion gear (88).

3. The transmission (20) of Claim 1 or 2 wherein said synchronizer clutch (58) includes a range sleeve (172) mounted for rotation with said second gear (84) and movement between a first position whereat said second gear (84) is coupled to said second shaft (48) and a second position whereat said second gear (84) is coupled to a housing (45), a first synchronizer for causing speed synchronization between said second gear (84) and said second shaft (48) in response to movement of said range sleeve (172) to said first position, and a second synchronizer for causing speed synchronization between said second gear (84) and said housing (45) in response to movement of said range sleeve (172) to said second position.

4. The transmission (20) of Claim 1, 2 or 3 further comprising a reverse gear assembly (160) including a reverse input gear (162) driven by one of said constant mesh gear sets, a reverse output gear (164) meshed with a transfer gear (168) fixed to said second gear (84), and a second clutch (174) for selectively coupling said reverse output gear (164) to said reverse input gear (162).

5. The transmission (20) of anyone of the foregoing Claims further comprising a third clutch (200,400) for coupling any two of said input member (98) and said first and second output members (110,114,116,120) of said interaxle differential (60).

6. The transmission (20) of Claim 5 wherein said third clutch (400) includes a lock-out collar (404) movable between a first position directly coupling said input member (98) to one of said output members (110,114,116,120) for shifting said interaxle differential (60) into a locked mode and a second position uncoupling said input member (98) from said one output member for shifting said interaxle differential (60) into an open mode.

7. The transmission (20) of Claim 5 or 6 wherein said third clutch (200) include a clutch pack (222) mounted between any two of said input member (98) and said first and second output members (110,114,116,120), and means (230) for engaging said clutch pack (222) in response to speed differentiation between said first and second output members (110,114,116,120) exceeding a predetermined threshold value.

8. The transmission (20) of Claim 7 wherein said engaging means includes an actuator (230) for controlling the clutch engagement force exerted on said clutch pack (222), said actuator (230) being actuated by control signals from a controller (232), and wherein said controller (232) receives sensor input signals indicative of operating characteristics of the vehicle and generates said control signals in response to said sensor input signals.

9. The transmission (20) of Claim 8 wherein said sensor input signals include front and rear speed signals that are indicative of the rotary speed of said first and second output members (110,114,116,120), and wherein said controller (232) determines the value of a speed difference between said first and second output members (110,114,116,120) based on said speed signals and controls actuation of said actuator (230) as a function of said speed difference value.

10. The transmission (20) of Claim 9 wherein said controller (232) employs an on/off control scheme for controlling actuation of said actuator (230).

11. The transmission (20) of Claim 9 wherein said controller (232) employs an adaptive control scheme for controlling actuation of said actuator (230).

12. The transmission (20) of anyone of Claims 8 to 11 further comprising a mode select mechanism (279) capable of generating a mode signal which is sent to said controller (232) and is indicative of selection of one of an Automatic mode and a Locked mode, said controller (232) causes said actuator to fully engage said second clutch when said Locked mode is selected, and said controller (232) controls the actuated condition of said second clutch as a function of the value of said operating characteristic when said Automatic mode is selected.

13. The transmission (20) of anyone of the foregoing Claims further comprising a fourth clutch operable for selectively disconnecting one of said first and second output members (110,114,116,120) from driven connection with its corresponding driveline (12,14).

14. The transmission (20) of Claim 13 wherein said fourth clutch includes a mode collar (418) movable between a 4WD position whereat said one of said first and second output members is coupled to its corresponding driveline (12,14) for establishing a four-wheel drive mode, and a 2WD position whereat said one of said first and second output members is uncoupled from its corresponding driveline (12,14) for establishing a two-wheel drive mode.

**Patentansprüche**

1. Getriebe (20) zur Verwendung in einem Kraftfahrzeug (10) mit einem Motor (18) und einer vorderen und einer hinteren Transmission (12, 14), wobei das Getriebe (20) enthält:

   eine erste Welle (46), die von dem Motor (18) angetrieben werden kann;
   eine zweite Welle (48);
   mehrere in Dauereingriff stehende Zahnradsätze (50, 52, 54) zum wahlweisen Koppeln der zweiten Welle (48) mit der ersten Welle (46) zum mitgenommenen Drehen und für unterschiedliche Übersetzungsverhältnisse;
   ein Zwischenachsdifferential (60) mit einem Eingangselement (98), einem ersten Ausgangselement (110, 114), das zum Verbinden mit der vorderen Transmission (12) geeignet ist, und einem zweiten Ausgangselement (116, 120), das zum Verbinden mit der hinteren Transmission (14) geeignet ist;
   einen Planeten-Zahnradsatz (56) mit einem drehfest mit der zweiten Welle (48) verbundenen ersten Zahnrad (82), einem zweiten Zahnrad (84) und einem mit dem ersten Zahnrad (82) und dem zweiten Zahnrad (84) in Eingriff stehenden dritten Zahnrad (88), das drehbar auf einem Träger (86) getragen ist, der mit dem Eingangselement (98) des Zwischenachsdifferentials gekoppelt ist; und
   einer Kupplung (58) zum wahlweisen Koppeln des zweiten Zahnrads (84) mit einem feststehenden Element, um das Eingangselement (98) mit einem zweiten Übersetzungsverhältnis relativ zu der zweiten Welle (48) anzutreiben, **dadurch gekennzeichnet, daß** die Kupplung eine Synchronisierkupplung ist, die ferner zum wahlweisen Koppeln des zweiten Zahnrads (84) mit der zweiten Welle (48) einrückbar ist, um das Eingangselement (98) mit einem ersten Übersetzungsverhältnis relativ zu der zweiten Welle (48) anzutreiben, und das zweite Zahnrad (84, 168) zum wahlweisen Einstellen eines Rückwärtsgangs mit einem Rücklaufzahnrad (164) in Dauereingriff steht.

2. Getriebe (20) nach Anspruch 1, wobei das erste Zahnrad ein Sonnenrad (82), das zweite Zahnrad ein Hohlrad (84) und das dritte Zahnrad ein Planetenrad (88) ist.

3. Getriebe (20) nach Anspruch 1 oder 2, wobei die Synchronisierkupplung (58) enthält: eine Schaltmuffe (172), die so angebracht ist, daß sie sich mit dem zweiten Zahnrad (84) dreht und zwischen einer ersten Stellung; in der das zweite Zahnrad (84) mit der zweiten Welle (48) gekoppelt ist, und einer zweiten Stellung, in der das zweite Zahnrad (84) mit einem Gehäuse (45) gekoppelt ist, bewegbar ist, eine erste Synchronisiereinrichtung, die auf eine Bewegung der Schaltmuffe (172) in die erste Stellung hin eine Drehzahlsynchronisation zwischen dem zweiten Zahnrad (84) und der zweiten Welle (48) bewirkt, und eine zweite Synchronisiereinrichtung, die auf eine Bewegung der Schaltmuffe (172) in die zweite Stellung hin eine Drehzahlsynchronisation zwischen dem zweiten Zahnrad (84) und dem Gehäuse (45) bewirkt.

4. Getriebe (20) nach Anspruch 1, 2 oder 3, das ferner eine Rückwärtsganganordnung (160) enthält, die ein Rücklauf-Eingangszahnrad (162), das von einem der in Dauereingriff stehenden Zahnradsätze angetrieben wird, ein Rücklauf-Ausgangszahnrad (164), das mit einem an dem zweiten Zahnrad (84) befestigten Übertragungszahnrad (168) in Eingriff steht, und eine zweite Kupplung (174) zum wahlweisen Koppeln des Rücklauf-Ausgangszahnrads (164) mit dem Rücklauf-Eingangszahnrad (162) hat.

5. Getriebe (20) nach einem der vorhergehenden Ansprüche, das ferner eine dritte Kupplung (200, 400) zum Koppeln des Eingangselements (98) des Zwischenachsdifferentials (60) mit dessen erstem oder zweitem Ausgangselement (110, 114, 116, 120).

**6.** Getriebe (20) nach Anspruch 5, wobei die dritte Kupplung (400) einen Sperring (404) enthält, der zwischen einer ersten Stellung, in der er das Eingangselement (98) direkt mit einem der Ausgangselemente (110, 114, 116, 120) koppelt, um das Zwischenachsdifferential (60) in einen gesperrten Zustand zu bringen, und einer zweiten Stellung bewegbar ist, in der er das Eingangselement (98) von dem Ausgangselement löst, um das Zwischenachsdifferential (60) in einen offenen Zustand zu bringen.

**7.** Getriebe (20) nach Anspruch 5 oder 6, wobei die dritte Kupplung (200) ein zwischen dem Eingangselement (98) und dem ersten oder dem zweiten Eingangselement (110, 114, 116, 120) angeordnetes Kupplungsscheibenpaket (222) und Mittel (230) hat, die auf das Kupplungsscheibenpaket (222) einwirken, wenn der Drehzahlunterschied zwischen dem ersten und dem zweiten Ausgangselement (110, 114, 116, 120) einen vorbestimmten Schwellenwert überschreitet.

**8.** Getriebe (20) nach Anspruch 7, wobei die Mittel zum Einwirken einen Betätiger (230) haben, der die auf das Kupplungsscheibenpaket (222) ausgeübte Kupplungskraft steuert und von Steuersignalen einer Steuerung (232) betätigt ist, und wobei die Steuerung (232) Sensoreingangssignale empfängt, die Betriebseigenschaften des Fahrzeugs angeben, und die Steuersignale in Abhängigkeit dieser Sensoreingangssignale erzeugt.

**9.** Getriebe (20) nach Anspruch 8, wobei die Sensoreingangssignale vordere und hintere Drehzahlsignale enthalten, die die Drehgeschwindigkeit des ersten und des zweiten Ausgangselements (110, 114, 116, 120) angeben, und wobei die Steuerung (232) ausgehend von den Drehzahlsignalen den Wert eines Drehzahlunterschieds zwischen dem ersten und dem zweiten Ausgangselement (110, 114, 116, 120) ermittelt und die Betätigung des Betätigers (230) als Funktion des Wertes des Drehzahlunterschieds steuert.

**10.** Getriebe (20) nach Anspruch 9, wobei die Steuerung (232) zum Steuern der Betätigung des Betätigers (230) ein Ein/Aus-Steuerschema verwendet.

**11.** Getriebe (20) nach Anspruch 9, wobei die Steuerung (232) zum Steuern der Betätigung des Betätigers (230) ein adaptives Steuerschema verwendet.

**12.** Getriebe (20) nach einem der Ansprüche 8 bis 11, das ferner einen Betriebsart-Wählmechanismus (279) zum Erzeugen eines Betriebsart-Signals hat, das der Steuerung (232) zugeführt wird und die Wahl einer Automatik-Betriebsart oder einer Sperr-Betriebsart anzeigt, wobei die Steuerung (232) den Betätiger zum vollständigen Einwirken auf die zweite Kupplung veranlaßt, wenn die Sperr-Betriebsart gewählt ist, und die Steuerung (232) den Betriebszustand des Betätigers als Funktion des Wertes der Betriebseigenschaft steuert, wenn die Automatik-Betriebsart gewählt ist.

**13.** Getriebe (20) nach einem der vorhergehenden Ansprüche, das ferner eine vierte Kupplung enthält, die zum wahlweisen Lösen des ersten oder des zweiten Ausgangselements (110, 114, 116, 120) aus der angetriebenen Verbindung mit seiner entsprechenden Transmission (12,14) betätigbar ist.

**14.** Getriebe (20) nach Anspruch 13, wobei die vierte Kupplung einen Betriebsart-Ring (418) enthält, der zwischen einer Vierradantriebsstellung, in der das erste oder das zweite Ausgangselement mit seiner entsprechenden Transmission (12, 14) gekoppelt ist, um einen Vierradantrieb einzustellen, und einer Zweiradantriebsstellung bewegbar ist, in der das erste oder das zweite Ausgangselement von seiner entsprechenden Transmission (12,14) entkoppelt ist, um einen Zweiradantrieb einzustellen.

**Revendications**

**1.** Un système de transmission (20) à utiliser dans une automobile (10) ayant un moteur (18) et des organes de transmission avant et arrière (12, 14), ledit système de transmission (20) comprenant :

un premier arbre (46) adapté pour être entraîné par le moteur (18) ;
un second arbre (48) ;
une pluralité de trains d'engrenages à prise constante (50,52,54) pour sélectivement coupler ledit second arbre (48) au dit premier arbre (46) pour produire une rotation entraînée à divers rapports de vitesse ;
un différentiel inter-essieux (60) ayant un élément d'entrée(98) ,un premier élément de sortie (110, 114) adapté pour être interconnecté à l'organe de transmission avant (12) et un second élément de sortie (116, 120) adapté pour être interconnecté à l'organe de transmission arrière (14);
un train d'engrenages planétaire (56) ayant un premier engrenage (82) fixe pour entrer en rotation avec ledit second arbre (48) ; un deuxième engrenage (84); et un troisième engrenage (88) engrené avec ledit premier engrenage (82) et ledit deuxième engrenage (84), ledit troisième engrenage (88) est soutenu en rotation sur un support (86) qui est couplé au dit élément d'entrée (98) du dit différentiel inter-essieux; et

un embrayage (58) pour coupler sélectivement ledit deuxième engrenage (84) à un élément fixe afin d'entraîner ledit élément d'entrée (98) à un deuxième rapport de vitesses par rapport au dit second arbre (48) ; **caractérisé en ce que** l'embrayage est un embrayage de synchronisation que l'on peut en outre engager pour coupler sélectivement ledit deuxième engrenage (84) au dit second arbre (48) afin d'entraîner ledit élément d'entrée (98) à un premier rapport de vitesse par rapport au dit second arbre (48) ; et **en ce que** ledit deuxième engrenage (84, 168) est en prise constante avec un engrenage inverseur (164) pour établir sélectivement un rapport inverse.

2. Le système de transmission (20) de la revendication 1 dans lequel ledit premier engrenage est un solaire (82); le deuxième engrenage est une couronne dentée (84) ; et ledit troisième engrenage est un engrenage à pignons (88).

3. Le système de transmission (20) de la revendication 1 ou 2 dans lequel ledit embrayage de synchronisation (58) comprend un manchon à gammes (172) monté pour entrer en rotation avec ledit deuxième engrenage (84) et pour se déplacer entre une première position à laquelle ledit deuxième engrenage (84) est couplé au dit second arbre (48) et une seconde position à laquelle ledit deuxième engrenage (84) est couplé à un logement (45) ; un premier dispositif de synchronisation pour provoquer la synchronisation de vitesse entre ledit deuxième engrenage (84) et ledit second arbre (48) en réponse au déplacement du dit manchon à gammes (172) jusqu'à ladite première position, et un second dispositif de synchronisation pour provoquer la synchronisation de vitesse entre ledit deuxième engrenage (84) et ledit logement (45) en réponse au déplacement du dit manchon à gammes (172) jusqu'à ladite seconde position.

4. Le système de transmission (20) de la revendication 1, 2 ou 3 comprenant en outre un ensemble d'engrenages inverseurs (160) comprenant un engrenage d'entrée inverseur (162) entraîné par un des dits trains d'engrenages à prise constante, un engrenage de sortie inverseur (164) engrené avec un engrenage de transfert (168) fixé au dit deuxième engrenage (84) ; et un deuxième embrayage (174) pour coupler sélectivement le dit engrenage de sortie inverseur (164) au dit engrenage d'entrée inverseur (162).

5. Le système de transmission (20) de l'une quelconque des revendications précédentes comprenant en outre un troisième embrayage (200, 400)pour coupler deux quelconques du dit élément d'entrée (98) et des dits premier et second éléments de sortie (110, 114, 116, 120) du dit différentiel inter-essieux (60).

6. Le système de transmission (20) de la revendication 5 dans lequel ledit troisième embrayage (400) comprend une bague de blocage (404) qui peut se déplacer entre une première position couplant directement ledit élément d'entrée (98) à l'un des dits éléments de sortie (110, 114, 116, 120) afin de commuter ledit différentiel inter-essieux (60) vers un mode verrouillé et une seconde position découplant ledit élément d'entrée (98) du dit élément de sortie donné afin de commuter ledit différentiel inter-essieux (60) vers un mode ouvert.

7. Le système de transmission (20) de la revendication 5 ou 6 dans lequel ledit troisième embrayage (200) comprend un embrayage à disques multiples (222) monté entre deux quelconques du dit élément d'entrée (98) et des dits premier et second éléments de sortie (110, 114, 116, 120); et un moyen (230) pour engager ledit embrayage à disques multiples (222) en réponse à une différence de vitesses entre les dits premier et second éléments de sortie (110, 114, 116, 120) qui dépasse une valeur de seuil prédéterminée.

8. Le système de transmission (20) de la revendication 7 dans lequel ledit moyen d'engagement comprend un actionneur (230) pour commander la force d'engagement d'embrayage exercée sur ledit embrayage à disques multiples (222), ledit actionneur (230) étant actionné par des signaux de commande délivrés par un module de commande (232), et dans lequel ledit module de commande (232) reçoit des signaux d'entrée de capteur indicateurs des caractéristiques opérationnelles du véhicule et génère les dits signaux de commande en réponse aux dits signaux d'entrée de capteur.

9. Le système de transmission (20) de la revendication 8 dans lequel les dits signaux d'entrée de capteur comprennent des signaux de vitesse avant et arrière qui sont indicateurs de la vitesse de rotation des dits premier et second éléments de sortie (110, 114, 116, 120); et dans lequel ledit module de commande (232) détermine la valeur d'une différence de vitesse entre les dits premier et second éléments de sortie (110, 114, 116, 120) basée sur les dits signaux de vitesse et commande l'actionnement du dit actionneur (230) en fonction de la valeur de la dite différence de vitesse.

10. Le système de transmission (20) de la revendication 9 dans lequel le dit module de commande (232) utilise un système de commande marche/arrêt pour commander l'actionnement du dit actionneur (230).

**11.** Le système de transmission (20) de la revendication 9 dans lequel le dit module de commande (232) utilise un système de commande adaptative pour commander l'actionnement du dit actionneur (230).

**12.** Le système de transmission (20) de l'une quelconque des revendications 8 à 11 comprenant en outre un mécanisme de sélection de mode (279) capable de générer un signal de mode qui est envoyé au dit module de commande (232) et qui est indicateur de la sélection d'un mode parmi le mode Automatique et le mode Verrouillé, ledit module de commande (232) amène ledit actionneur à embrayer complètement ledit deuxième embrayage lorsque le mode Verrouillé est sélectionné, et ledit module de commande(232) commande l'état actionné du dit deuxième embrayage en fonction de la valeur de la dite caractéristique opérationnelle lorsque ledit mode Automatique est sélectionné.

**13.** Le système de transmission (20) de l'une quelconque des revendications précédentes comprenant en outre un quatrième embrayage qui peut être actionné pour dégager sélectivement un des dits premier et second élément de sortie (110, 114, 1116, 120) de la connexion entraînée avec son organe de transmission (12, 14)correspondant.

**14.** Le système de transmission (20) de la revendication 13 dans lequel ledit quatrième embrayage comprend une bague de mode (418) qui peut se déplacer entre une position 4WD (quatre roues motrices) à laquelle ledit un des dits premier et second éléments de sorties est couplé à son organe de transmission (12,14) correspondant pour établir un mode de quatre roues motrices, et une position 2WD (deux roues motrices) à laquelle ledit un des dits premier et second éléments de sorties est découplé de son organe de transmission (12, 14) correspondant pour établir un mode de deux roues motrices.

*Fig-1*

Fig-2

| GEAR | CLUTCH SLEEVE 140 | CLUTCH SLEEVE 150 | CLUTCH SLEEVE 174 | CLUTCH SLEEVE 194 |
|---|---|---|---|---|
| 1ST - HIGH | B | C | N | L |
| 2ND - HIGH | A | D | N | H |
| 3RD - HIGH | B | D | N | H |
| 4TH - HIGH | A | C | N | H |
| 5TH - HIGH | B | C | N | H |
| REV - HIGH | B | D | R | N |
| 1ST - LOW | A | D | N | L |
| 2ND - LOW | B | D | N | L |
| 3RD - LOW | A | C | N | L |
| REV-LOW | A | D | R | N |

_Fig-3_

_Fig-4_

*Fig-5*

*Fig-6*

*Fig-7*

EP 0 865 955 B1

TRANSFER
CLUTCH — 228

222

351 — VISUAL
DISPLAYS

ACTUATOR

342

ACTUATOR
BRAKE

230

OPERATOR INPUTS

BRAKE
SENSOR

362

THROTTLE
POSITION

366

STEERING
ANGLE

364

360

232

CONTROL
MODULE

350

MODE
SELECT

279

SYSTEM INPUTS

VEHICLE
SPEED — 352

IGNITION — 354

BATTERY — 356

F.W.
SPEED — 234

R.W.
SPEED — 236

286

_Fig-8_

_Fig-9_

SPEED DIFFERENTIAL ΔN
$(\Delta N = n_R - n_F + C)$

% DUTY CYCLE

100

Y

(0-10 MPH)

(10-30 MPH)

(> 30 MPH)

X

*Fig-10*

*Fig-11*

EP 0 865 955 B1